# EUROPEAN PATENT APPLICATION

(11) **EP 0 853 965 A1**
(43) Date of publication of application: **22.07.1998**
(21) Application number: 98650004.9
(22) Date of filing: 13.01.1998
(51) Int. Cl.: B01D 46/52, B01D 29/07

(54) **A filter unit and apparatus and process for manufacturing same**

(30) Priority: 13.01.1997 IE 970022
(71) Applicant: Lanod Holdings Limited, Dublin 6 (IE)
(72) Inventor: O'Connell, Alan, Howth, Dublin 13 (IE); Donovan, Don, Glasnevin, Dublin 11 (IE); Smith, Joseph, Portmarnock, County Dublin (IE)
(74) Representative: McKeown, Yvonne Mary

(57) **Abstract**

A blank (1,2) for framing a filter element to produce a panel filter includes a pair of opposed slots (10, 11) which constitute a corner for folding the blank (1, 2) around the comer between two edges of a filter element (F). A corner score mark (13) is provided between the slots to assist the folding. The blank also includes a flange score mark (4) parallel to a longitudinal edge of the blank. The flange (6) is foldable about the flange score mark (4) to overlie the perimeter of the upper filtering surface of the filter element (F). A second flange score mark (5) is spaced from score mark (4) by a distance which matches the distance between the filter element upper and lower filtering surfaces and flange (8) is foldable about score mark (5) to overlie a portion of the lower filtering surface. An automated apparatus to produce panel filters is disclosed.

## Description

The present invention relates to a filter unit and to an apparatus and a process for preparing a filter unit. In particular, it relates to a panel filter and to an efficient method of producing panel filters.

Panel filters comprise a filter mesh of appropriate size, porosity and composition for the particular use to which the filter is to be put, surrounded by a frame element which is sized to fit across the inlet or outlet of a particular air space. The frame is usually made from a disposable material, such as cardboard. To increase the filtering surface area, the filter may be pleated and accordingly the frame element has a depth dimension to accommodate the height (depth) of the pleats, in addition to length and width dimensions. Filters are required in a large number of industrial, commercial, medical, household and other premises where there is a necessity or a desire to filter either incoming or outgoing air. Unfortunately, inlets and outlets are of non-standard sizes and thus, the panel filters must be made to the particular specifications necessary for individual cases. This is normally done manually by cutting a length of filter material to the desired size, then cutting strips of the framing material to match the four sides of the usually rectangular or square filter, and fixing these together to form a frame element sized to hold the filter and to slot into an aperture in a panel in such fashion that air flowing through the aperture is filtered by the filter.

Because the frames need to be made manually and the final filter units are of non-standard sizes, the process for making the filter units is cumbersome, time-consuming and wasteful of materials. It has been estimated that manual frame assembly results in wastage of up to 20% of the framing material. In addition, it is expensive in man-power since the units are assembled by hand.

The present invention seeks to provide an efficient process for constructing panel filters, in which waste is minimised and operator-time is managed so as to achieve high productivity.

The invention also seeks to provide a process for producing the filters and an apparatus for operating the process.

The present invention provides an apparatus for preparing a panel filter, comprising;
blank preparation means for (a) receiving filter frame material from a feedstock, (b) cutting at least one filter frame blank from the material and (c) producing corner slots and flange and corner scores in the blank;
means for applying an adhesive to the prepared blank;
means for framing a filter element having a pair of opposed faces and four edges in at least one blank, by folding the blank about the corner scores so that it adheres to at least one edge of the filter element and folding the blank about the flange scores so that a portion of each of the opposed faces of the filter element is adhered to the blank;
optionally including means for applying text or design markings to the blank and optionally including computerised means for controlling the apparatus.

In a preferred arrangement, the apparatus includes a plurality of workstations and means for transferring feedstock or blank material between the workstations, the workstations comprising:
a loading station for storing at least one supply of blank feedstock material, the loading station including guide means for loading a selected feedstock and for feeding the feedstock away from the loading station;
a punching station for forming opposed pairs of corner slots in the feedstock at right angles to the longitudinal axis thereof;
a scoring station for marking a pair of flange score marks on the longitudinal length of the feedstock, the flange score marks being spaced apart from one another by a distance corresponding to the depth of a filter to be framed by the blank, and for making the corner score marks extending between the corner slots,
a cutting section for cutting the slotted and scored feedstock into lengths corresponding to blanks,
a picking and gluing station comprising a left picker for picking up a blank and a right picker for picking up a blank, each picker turning the blank about its longitudinal axis from a horizontal to a vertical position and feeding each vertically disposed blank past a respective glue nozzle which applies glue to a surface of each blank; and
an assembly station in which a filter is received and the prepared, glued blanks are fitted about the filter by folding the blanks about the score marks and slots to frame each filter by a pair of blanks.

The invention also provides a panel filter made by the above apparatus, the filter optionally including at least one filter reinforcing element laid against or fixed to at least one of the opposed faces of the filter element to lend rigidity to the panel filter, the or each element preferably being retained between the face and a section of the blank which adheres to the face.

The invention also provides a process for preparing a panel filter, comprising:
feeding a filter frame material from a feedstock to a blank preparation means;
forming a blank from the frame material by cutting a desired length of material from the feedstock and making one or more corner slots, corner scores and upper and lower flange scores in the material;
applying an adhesive material to the scored surface of the blank;
framing a filter element having a top surface, a bottom surface and four edges in at least one blank by folding the blank about the or each corner-cuts and corner scores so that the adhesive-coated surface of the blank contact one or more edges of the filter element and folding the blank about the flange scores so that the flanges of the blank lie against an outer portion of the top and bottom filtering surfaces of the filter element, so as to frame the filter element in the framing material without any substantial obstruction of the filtering surface of the filter element.

The invention further provides a blank for forming a frame about a filter element, the blank comprising a length of a framing material sized to match the length of at least one of four edges of the filter element and having a depth greater than the depth of the filter element, the blank having at least one pair of opposed slots, each slot extending from a longitudinal edge of the blank at right angles thereto and a corner score mark etched on an inner face of the blank and extending between the bases of the pair of slots, the blank further including a pair of flange score marks disposed parallel to one another and to the longitudinal edges of the blank, the flange score marks being formed on the inner face of the blank and being spaced apart from one another by a distance corresponding to the depth of the filter element, so that in use as a framing element, the blank lies against at least a portion of two edges of the filter element with the slots and corner scores extending about the corner between said two edges, and a flange between a flange score mark and its nearest longitudinal edge of the blank being folded so as to overlie a portion of the perimeter of either the top or bottom filtering face of the filter element.

The term "depth" of the filter refers to the thickness of the filter or, where the filter is folded, for example, in a waveform of pleated formation, "depth" refers to the height of the waves or pleats.

The invention will now be described more particularly with reference to the accompanying drawings, in which:-
Figures 1 to 3 illustrate successive steps in the assembly of a rectangular-shaped panel filter;
Figure 4 is a perspective view showing assembled panel filters of differing sizes;
Figure 5 is a schematic elevational drawing of an apparatus for conducting the process of the invention;
Figure 6 is a plan view from above of the apparatus; and
Figure 7 is a flow chart showing the process steps conducted by the apparatus.

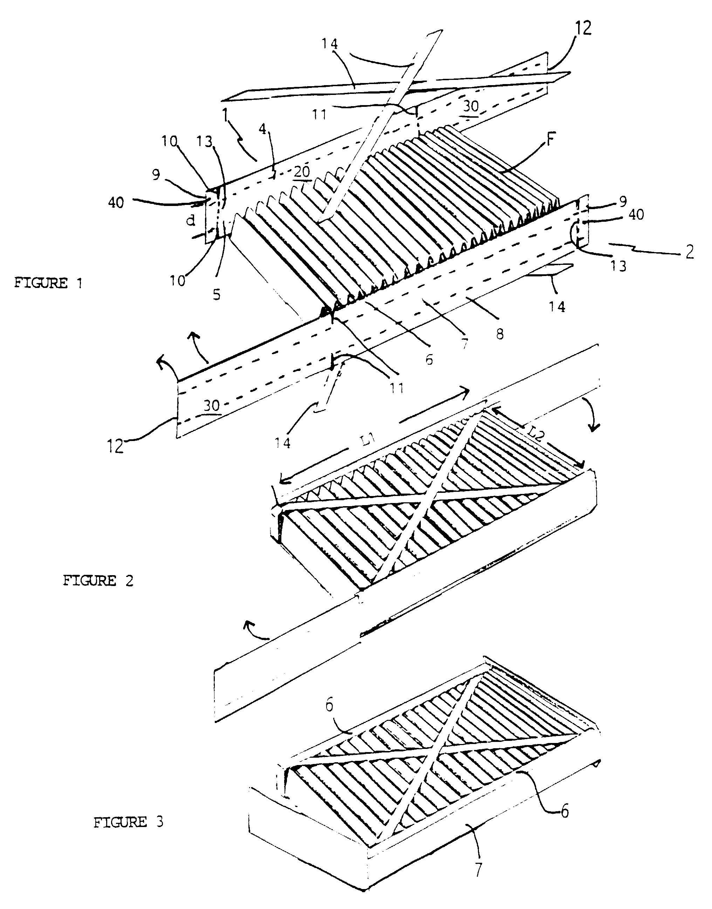

Referring initially to Figures 1 to 3, the assembly of a panel filter will now be described. Firstly, a pair of frame blanks 1, 2 are cut from a roll of frame material. Generally, the frame material comprises a stiff, robust, pliable material such as cardboard. Various depths of cardboard may be provided and the desired depth will be selected, depending on the depth of the pleats of the pleated filter F to be accommodated within the final frame element. Typically, cardboards of depth of 7.62 cm, 9.8 cm and 15.24 cm (1, 2 and 4 inch, respectively) are used to accommodate filter of pleat depths 2.54 cm, 5.08 cm and 10.16 cm. Each frame blank 1, 2 is cut to a length which is slightly greater than that of two continuous sides of the filter F. The depth (d) of each blank 1, 2 is greater than the depth of the filter F so that the blank may be folded against the upper and lower pleated surfaces of the filter F. For this purpose, each blank 1, 2 is provided with a pair of parallel score marks 4, 5 spaced apart by a distance equal to the depth of the filter along the longitudinal axis of the blank. These score marks divide the blank into three sections, an upper flange 6, a middle section 7 and a lower flange 8. The flanges typically are 2.34 cm in depth.

Adjacent an end 9 of each blank 1, 2 is provided a pair of slots 10 extending through the upper and lower sections 6, 8 as far as the score marks 4, 5 respectively. A second similar pair of slots 11 is provided, spaced from the slots 10 along the longitudinal axis of the blanks 1, 2 by a distance equal to the length L1 of the filter F to define an area 20 between the pairs of slots 10, 11. In the final product, the slots 10, 11 define the corners of the panel filter. Each blank also includes an area 30 extending between slots 11 and end 12, equal to the length L2 of the filter. Finally, the area between slots 10 and end 9 defines a corner tab 40. Score marking 13 are provided along the middle section 7 joining each pair of slots 10, 11.

The score marks shown in Figure 1 on blank 2 (dotted lines) are shown for illustrative purposes only. It will be appreciated that these marks are formed only on the inner facing, hidden side of blank 2 in reality.

To begin the assembly process, each blank is laid against the filter F, one to either side of the filter along the length L1. A pair of cross-pieces 14 is arranged in an X-shape and laid on the upper-facing pleated face of the filter. A second pair of cross-pieces 14 is likewise laid on the opposing pleated face of the filter. Preferably, the cross-pieces 14 are securely fixed to the filter by gluing. Next, area 20 of the blank is arranged so that the middle section 7 lies against the side L1 of the filter, as shown in Figure 1. Then, tabs 40 and flanges 6 and 8 of area 20 and tabs 40 are folded toward the filter about the respective score marks 13, 4 and 5.

As shown in Figures 2 and 3, the next step is to fold areas 30 so that their middle sections 7 lie against the sides L2 of the filter and overlie tabs 40. The upper and lower flanges 6, 8 of area 30 are then folded about the score marks 4, 5 to overlie the filter, flanges 6 and 8 of the tabs 40 and the ends of flanges 6, 8 of area 20.

The various elements are retained in their folded positions by suitable fixing means, such as adhesive or staples and preferably by adhesive. Most preferably, the adhesive comprises a hot melt glue which is applied to the blanks 1, 2 from spray nozzles fed from a reservoir of glue.

Cross-pieces 14 are optional to the assembly of the filter unit. They may be used as described above, or in any alternative suitable configuration or pattern, when it is desirable to lend extra rigidity to the filter unit, for example when a pleated filter is used. In particular, where a relatively large filter is to be used and/or where the filter is used to filter a body of air which is flowing fast, then cross-pieces of some sort are usually necessary to prevent the filter from being blown away from the sides of its frame. This would of course be undesirable as any gaps between the filter and frame would allow unfiltered air to flow past the filter.

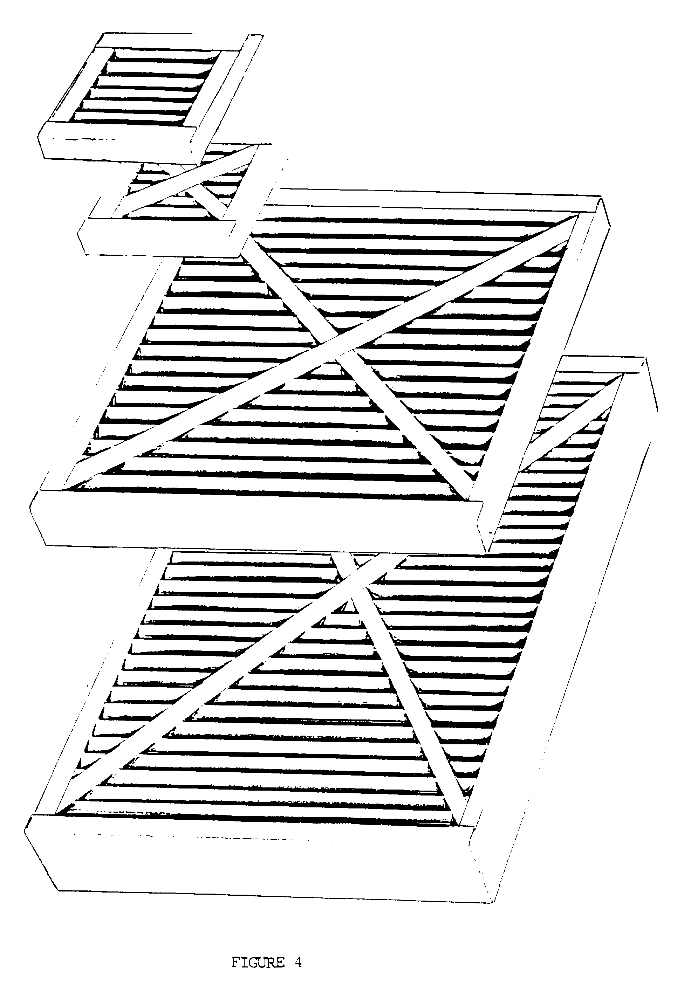

Figure 4 shows a number of assembled disposable panel filters of varying sizes and shapes and with and without cross pieces 14.

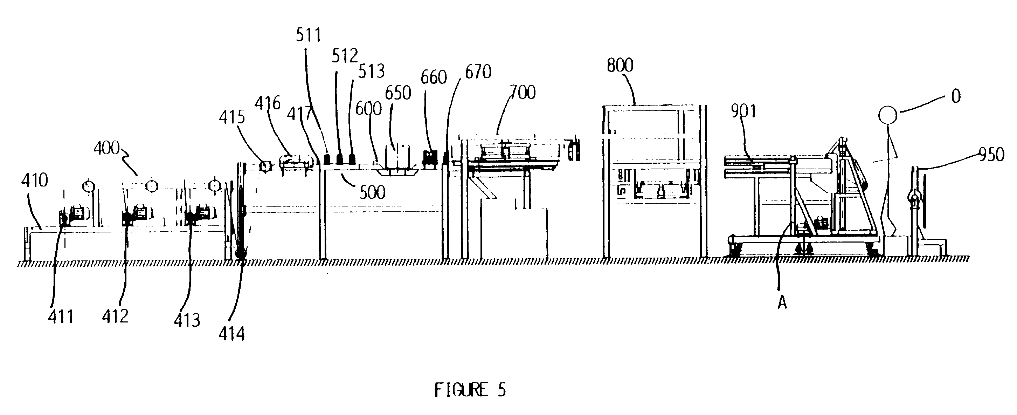

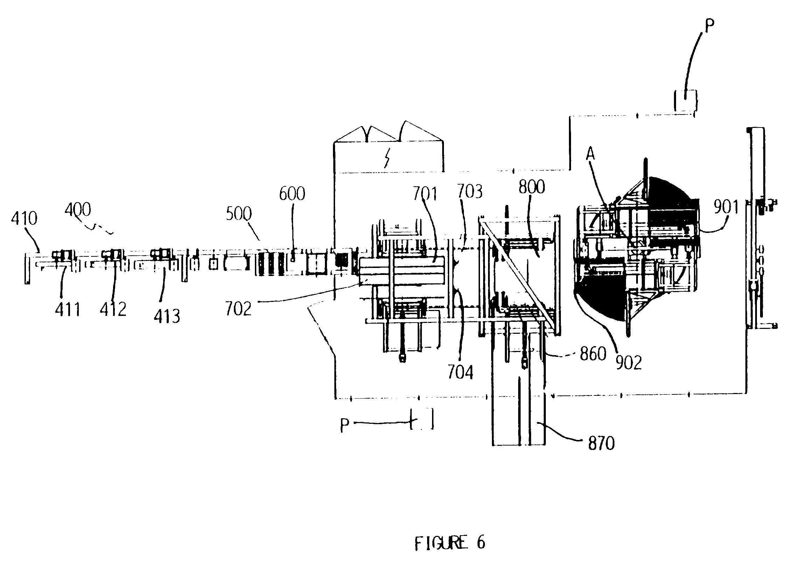

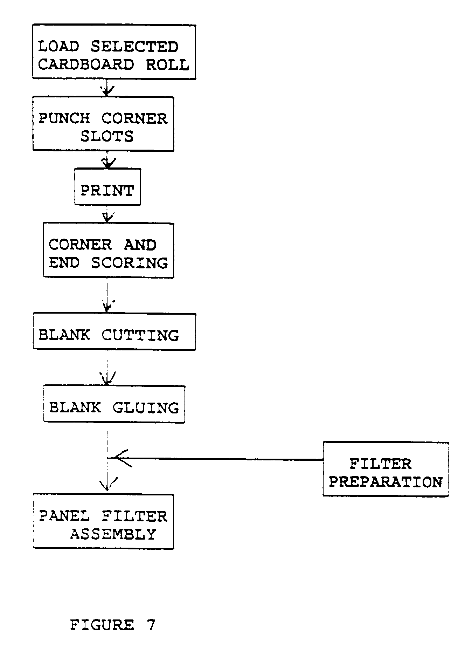

Referring now to Figures 5 and 6, an apparatus for assembling panel filters will now be described. Figure 7 is a flow sheet illustrating the various process steps undertaken by the apparatus. The apparatus includes a number of stations, each of which carries out a particular process step or set of process steps. The overall operation of the apparatus is controlled by a programmable logic controller (PLC) (not shown) with panel views P. An operator programs the PLC with information concerning the panel filters to be produced including the length, width and depth dimensions of the required panel filters, the number of units to be produced, order number, identification number, and/or proprietary information to appear on the panel filters, etc. The apparatus is then operated under the control of the PLC to produce the desired number of filters to desired specifications. The PLC may be programmed with a number of different jobs, so that the transition from production of one type of filter to a different one can be effected without interruption.

A loading station 400 includes a frame 410 which can accommodate rolls of cardboard of different dimensions. Holders 411, 412 and 413 hold rolls of cardboard of widths 7.62 cm, 9.8 cm and 15.24 cm respectively. Under the control of the PLC, cardboard is drawn from the roll on the appropriate holder 411, 412 or 413 and led via rollers 414, 415 to the truing device 416 and guide 417. The truing device 416 and guide 417 ensure that the cardboard is properly centred and disposed for passing the punching station. The punching station 500 comprises three punch sets 511, 512, 513 which operate to punch out opposing segments of cardboard from the longitudinal edges of the cardboard so as to create the pairs of slots 10, 11. Punch sets 511, 512 and 513 create slots in the cardboard widths 7.62 cm, 9.8 cm and 15.24 cm respectively and in each case the slots created extend at right angles to the longitudinal edge of the cardboard and have a depth of about 2.54 cm from that longitudinal edge. Under the control of the PLC, the appropriate punch set is activated as the cardboard passes beneath it so as to create the pairs of opposing slots at the specified spacings. As described above, these slots constitute the eventual corner areas of the finished panel filters.

The punched board then passes an optional marking station at which an ink jet 600 is operated to place the desired printed information on that flat side of the cardboard which. in the final assembled panel filter, faces outwardly. Next, the cardboard is transferred to the scoring device 650 which produces the score marks 4, 5. Thereafter, the scored board passes to the corner score station 660, at which the corner score marks 13 are introduced. Finally, the boards are completed by passage over the cutting section 670, which cuts the board at the required position to give a blank 1 or 2, under control of the PLC. The PLC is programmed in such a way that the advancing roll of cardboard is formed and cut sequentially into a blank 1, followed by a blank 2, this sequence repeating until a sufficient number of blanks 1, 2 has been completed to prepare the desired number of panel filters.

The next step in the sequence is the transfer of the prepared blanks to the picking and gluing station 700. This station comprises a pair of parallel pickers, one left picker 701 and one right picker 702. Each picker 701, 702 comprises a flat surface sized to allow the blank, 1, 2 respectively to lie on it. The blanks 1, 2 lie flat as they leave the cutting station 670. A blank 1 is transferred onto the left picker 701 and suction pads (not shown) on the picker are activated to contact the outer surface of the blank 1 so as to hold the blank 1 by suction. Next, the left picker 701 pivots so that the blank 1 is rotated about its longitudinal axis from a horizontal position to a vertical position. The blank 1 continues to advance and passes a left glue nozzle 703 at which glue is sprayed onto the exposed inner surface of the blank 1, that is to say, the surface which in the final panel filter, contacts the filter element. The transfer of the blank 1 is assisted by the provision of a number of suction pads along the length of the picker 701 which are deployed sequentially under the control of the PLC to take up and grip the advancing blank 1. Once the glue has been applied, the blank 1 exits the station 700 and is transferred to the assembly station 800. It is followed into the station 700 by a blank which is picked up by the suction pads of the right picker 702, and pivoted about its longitudinal axis. Glue is applied to the inner surface of blank 2 by glue nozzle 704 as the blank is advanced with the assistance of the suction pads. The blank 2 then enters the assembly station 800.

In the assembly station 800, the blanks 1, 2 are held with the glued surfaces facing one another, substantially in the relative positions shown in Figure 1. To the assembly station 800 is then introduced a filter element prepared at carousel 900.

Carousel 900 comprises a rotatable platform having a pair of feed units 901, 902. An operator O takes a pair of cross-pieces 14 and applies glue to one side of each of them from glue nozzle 950. He then places the glued cross-pieces onto feed unit 901 and lays a filter unit on top so that the underside of the filter is attached to the cross-pieces 14. Then, he places a second set of glued cross pieces 14 onto the upper-facing surface of the filter. This completes the preparation of the filter, which is then ready to be assembled with the blanks 1, 2 to form the completed panel filter.

The operator next actuates the PLC to rotate the carousel about the vertical axis A by 180°, thus moving the charged feed unit 901 from the position shown in Figure 6 to that shown in Figure 5. At the same time, empty feed unit 902 is rotated away from the assembly station 800 back to the operator to be charged with a fresh filter unit. Once placed beside the assembly station 800, the charged feed unit 901 advances into the assembly station 800, bringing the prepared filter unit with it. A series of levers and actuators (not shown) then carry out the steps described in relation to Figures 1 to 3, so as to encase and seal the prepared filter in the prepared, glue coated blanks 1, 2. Once this is completed, the feed unit 901 is withdrawn without the completed panel filter, which falls onto a stacking jig 860 underneath the assembly station 800. When a desired number of panel filters have been prepared, they are transferred from the stacking jig 860 onto a conveyor belt 870 (Figure 6) and removed for grouping packaging.

It will of course be understood that the invention is not limited to the specific details described herein, which are given by way of example only, and that various modifications and alterations are possible within the scope of the invention as defined in the appended claims.

## Claims

1. An apparatus for preparing a panel filter, comprising;
blank preparation means (400, 500, 650) for (a) receiving filter frame material from a feedstock, (b) cutting at least one filter frame blank (1,2) from the material and (c) producing corner slots (10,11) and flange (4,5) and corner scores (13) in the blank;
means (700) for applying an adhesive to the prepared blank;
means (800) for framing a filter element (F) having a pair of opposed faces and four edges with at least one blank, by folding the blank about the corner scores so that it adheres to at least one edge of the filter element and folding the blank about the flange scores so that a portion of each of the opposed faces of the filter element is adhered to the blank:

2. An apparatus according to Claim 1, including computerised control means for controlling the operation of the apparatus.

3. An apparatus according to Claim 1 or Claim 2, including a plurality of sequential workstations and means for transferring feedstock or blank material between the workstations, the workstations comprising:
a loading station (400) for storing at least one supply of blank feedstock material, the loading station including guide means (416, 417) for loading a selected feedstock and for feeding the feedstock away from the loading station;
a punching station (500) for forming opposed pairs of corner slots (10,11) in the feedstock at right angles to the longitudinal axis thereof:
a scoring station (650) for marking a pair of flange score marks (4,5) on the longitudinal length of the feedstock, the flange score marks being spaced apart from one another by a distance corresponding to the depth of a filter (F) to be framed by the blank, and for making corner score marks (13) extending between the corner slots (10,11);
a cutting section (670) for cutting the slotted and scored feedstock into lengths corresponding to blanks (1,2);
a picking and gluing station (700) comprising a left picker (701) for picking up a blank (1) and a right picker (702) for picking up a blank (2), each picker turning the blank about its longitudinal axis from a horizontal to a vertical position and feeding each vertically disposed blank past a respective glue nozzle (703, 704) which applies glue to a surface of each blank; and
an assembly station (800) in which a filter (F) is received and the prepared, glued blanks (1,2) are fitted about the filter by folding the blanks about the score marks (4,5,13) and slots (10,11) to frame each filter by a pair of blanks (1,2).

4. An apparatus according to Claim 3, in which the transfer means includes a plurality of sequentially operating suction pads and rollers which advance the feedstock or blanks through the apparatus, the suction pads being activated and deactivated in sequence to advance the material by sequential gripping and releasing.

5. An apparatus according to any preceding claim, including means (600) for applying text or design markings to the feedstock or blank.

6. A panel filter formed by the apparatus of any of the preceding claims.

7. A panel filter according to Claim 7, including at least one filter reinforcing element (14) laid against or fixed to at least one of the opposed faces of the filter element to lend rigidity to the panel filter, the or each element preferably being retained between the face and a section of the blank which adheres to the face.

8. A process for preparing a panel filter, comprising:
feeding a filter frame material from a feedstock to a blank preparation means (400,500,650);
forming a blank (1,2) from the frame material by cutting a desired length of material from the feedstock and making one or more corner slots (10,11), corner scores (13) and upper and lower flange scores (4,5) in the material;
applying an adhesive material to the scored surface of the blank;
framing a filter element (F) having a top surface, a bottom surface and four edges in at least one blank by folding the blank about the or each corner-cuts and corner scores so that the adhesive-coated surface of the blank contact one or more edges of the filter element and folding the blank about the flange scores so that the flanges of the blank lie against an outer portion of the top and bottom filtering surfaces of the filter element, so as to frame the filter element in the framing material without any substantial obstruction of the filtering surface of the filter element;
the method optionally including providing computerised means for controlling the operation of the process steps.

9. A method according to Claim 8, in which a feedstock or blank material is transferred between a plurality of workstations, the workstations comprising:
a loading station (400) for storing at least one supply of blank feedstock material. the loading station including guide means (416, 417) for loading a selected feedstock and for feeding the feedstock away from the loading station;
a punching station (500) for forming opposed pairs of corner slots (10,11) in the feedstock at right angles to the longitudinal axis thereof:
a scoring station (650) for marking a pair of flange score marks (4,5) on the longitudinal length of the feedstock, the flange score marks being spaced apart from one another by a distance corresponding to the depth of a filter (F) to be framed by the blank, and for making corner score marks (13) extending between the corner slots (10,11);
a cutting section (670) for cutting the slotted and scored feedstock into lengths corresponding to blanks (1,2),
a picking and gluing station (700) comprising a left picker (701) for picking up a blank (1) and a right picker (702) for picking up a blank (2), each picker turning the blank about its longitudinal axis from a horizontal to a vertical position and feeding each vertically disposed blank past a respective glue nozzle (703, 704) which applies glue to a surface of each blank; and
an assembly station (800) in which a filter (F) is received and the prepared, glued blanks (1,2) are fitted about the filter by folding the blanks about the score marks (4,5,13) and slots (10,11) to frame each filter by a pair of blanks (1,2).

10. A method according to Claim 9, including providing a plurality of sequentially operating suction pads and rollers which advance the feedstock or blanks between the workstations, the suction pads being activated and deactivated in sequence to advance the material by sequential gripping and releasing.

11. A method according to any of Claims 8 to 10, including applying text or design markings to the feedstock or blank.

12. A blank (1,2) for forming a frame about a filter element (F), the blank comprising a length of a framing material sized to match the length of at least one of four edges of the filter element and having a depth greater than the depth of the filter element, the blank having at least one pair of opposed slots (10,11), each slot extending from a longitudinal edge of the blank at right angles thereto and a corner score mark (13) etched on an inner face of the blank and extending between the bases of the pair of slots, the blank further including a pair of flange score marks (4,5) disposed parallel to one another and to the longitudinal edges of the blank, the flange score marks being formed on the inner face of the blank and being spaced apart from one another by a distance corresponding to the depth of the filter element, so that in use as a framing element, the blank lies against at least a portion of two edges of the filter element with the slots and corner scores extending about the corner between said two edges, and a flange (6,8) between a flange score mark and its nearest longitudinal edge of the blank being folded so as to overlie a portion of the perimeter of either the top or bottom filtering face of the filter element.
